(19) Europäisches Patentamt
European Patent Office
Office européen des brevets

(11) EP 3 717 584 B1

# (12) EUROPEAN PATENT SPECIFICATION

(45) Date of publication and mention of the grant of the patent:
**25.08.2021 Bulletin 2021/34**

(21) Application number: **18792929.4**

(22) Date of filing: **24.10.2018**

(51) Int Cl.:
***C09J 151/06*** *(2006.01)* ***C08L 51/06*** *(2006.01)*
***B32B 27/32*** *(2006.01)* ***C08F 110/02*** *(2006.01)*
***C08F 255/02*** *(2006.01)* ***B32B 1/08*** *(2006.01)*
***B32B 27/18*** *(2006.01)* ***B32B 27/30*** *(2006.01)*
***B32B 7/12*** *(2006.01)* ***B32B 15/085*** *(2006.01)*
***B32B 27/08*** *(2006.01)*

(86) International application number:
**PCT/EP2018/079086**

(87) International publication number:
**WO 2019/105659 (06.06.2019 Gazette 2019/23)**

## (54) IMPROVED ADHESIVE POLYMER COMPOSITION

VERBESSERTE HAFTENDE POLYMERZUSAMMENSETZUNG

COMPOSITION DE POLYMÈRE ADHÉSIF AMÉLIORÉE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **28.11.2017 EP 17204024**

(43) Date of publication of application:
**07.10.2020 Bulletin 2020/41**

(73) Proprietor: **Borealis AG**
**1220 Vienna (AT)**

(72) Inventors:
- **LIU, Yi**
  **4021 Linz (AT)**
- **OLLIKAINEN, Andrei**
  **06101 Porvoo (FI)**
- **DAHLÉN, Kristian**
  **444 86 Stenungsund (SE)**
- **SUNDHOLM, Tua**
  **06101 Porvoo (FI)**

(74) Representative: **Maiwald Patent- und Rechtsanwaltsgesellschaft mbH**
**Elisenhof**
**Elisenstraße 3**
**80335 München (DE)**

(56) References cited:
**EP-A1- 3 053 976** **EP-B1- 1 316 598**
**WO-A2-2009/103516**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 717 584 B1

## Description

### Field of the invention

The present invention relates to an adhesive polymer composition comprising an acid grafted polyethylene and an elastomer, to an article comprising a layer of said adhesive polymer composition, in particular a multilayer pipe such as a coated metal pipe, and to the use of the adhesive polymer composition for the production of an adhesive layer, in particular an adhesive layer of a multilayer structure of a pipe such as a coated metal pipe.

### Problem to be solved

Multilayer structures comprising two, three, four, five or more layers are known for many applications such as the protective coating of pipes. In these multilayer structures different layers most often consist of different materials which accordingly have different physical and chemical properties. This results in the problem that adjacent layers do not or only to an insufficient extent adhere to each other. Therefore, it is commonly known to build up multilayer structure with intermediate adhesive layers for improving the adhesion of adjacent layers for improving the adhesion of adjacent layers consisting of different materials and thus avoid delamination.

For example, in the coating of metal pipes commonly a three-layer polymer structure is used. It consists of an epoxy layer which is designed to firmly adhere to the outer surface of the metal wall of the pipe, an intermediate adhesive layer and an outer polyolefin protective layer which commonly is a high density polyethylene or polypropylene. The three-layer structure shows improved properties compared to formerly known single-layer coatings. On the one hand, the epoxy layer shows an improved bonding to the metal wall, avoids cathodic disbondment and provides less oxygen penetration whereas on the other hand the outer polyolefin-based layer provides good mechanical protection, and less water penetration. However, to avoid delamination of the polyolefin layer and the epoxy layer which would result in damage of the multilayer coating an adhesive layer between both layers is necessary.

ISO 21809-1:2011 requires that Vicat A 50 softening temperature of an adhesive for MDPE/HDPE coatings is equal to or more than 85 °C. In hot climate areas, such as Middle East and India, the market requirement is even higher, e.g. in India more than 100 °C.

The Vicat softening temperature is the temperature at which a flat-ended needle penetrates the specimen to the depth of 1 mm under a specific load. The temperature reflects the point of softening to be expected when a material is used in an elevated temperature application.

Adhesive layers and materials for the production of such layers are for example known from WO 99/37730 A1 which discloses an adhesive composition comprising an ethylene copolymer component and from 2 to 35 wt% of a grafted metallocene polyethylene.

JP 8208915 A describes an adhesive polyethylene composition comprising a grafted ethylene/alpha-olefin copolymer as cover for e.g. cables and steel pipes.

EP 0896044 A1 relates to an adhesive resin composition, in particular used for laminates. The resin contains an alpha-olefin/aromatic vinyl compound random copolymer which is partially or wholly graft-modified.

EP 0791628 B1 provides an adhesive composition comprising a grafted long-chain branched ethylene-$\alpha$-olefin copolymer with a tackifier or an ethylene-vinyl acetate copolymer for use as film layers in adhesion to e.g. metals.

EP 1316598 B1 discloses an adhesive polymer composition comprising an acid grafted polyethylene which has been produced using a single-site catalyst in an amount of at least 40 wt% of the overall composition.

WO 2009/103516 A2 discloses an adhesive polymer composition comprising an acid grafted polyethylene, which has a $M_w/M_n$ from 6 to 30, a density from 0.93 to 0.955 g/cm$^3$, $M_w$ from 20 000 to 500 000 g/mol, from 0.01 to 20 $CH_3$/1000 carbon atoms and at least 0.6 vinyl groups/1000 carbon atoms, in an amount of at least 50 wt% of the overall composition.

In spite of the prior art there still remains a need for adhesive polymer composition for use in the production of adhesive layers for multilayer structures with improved softening properties.

### Summary of the invention

The present invention provides an adhesive polymer composition comprising

a) 80.0 to 98.0 wt% of an ethylene polymer,
b) 2.0 to 20.0 wt% of an ethylene-butylacrylate copolymer, and
c) 0 to 4.0 wt% of additives, based on the total weight of the adhesive polymer composition,
wherein the ethylene-butylacrylate copolymer contains units derived from butylacrylate in an amount of from 3.0 to 5.5 wt%, based on the total weight of the adhesive polymer composition and the ethylene polymer or the ethylene

polymer and the ethylene-butylacrylate copolymer have been grafted with an acid grafting agent.

The present invention also provides an article, in particular a multilayer pipe, comprising an adhesive layer which comprises the adhesive polymer composition.

The present invention also provides a use of the adhesive polymer composition for the production of an adhesive layer, preferably an adhesive layer of a pipe.

**Detailed description**

The inventive adhesive polymer composition shows improved softening properties. The adhesive polymer composition comprises an ethylene polymer and an ethylene-butylacrylate copolymer.

The ethylene polymer is a non-elastomeric homopolymer of ethylene or a copolymer of ethylene with one or more $\alpha$-unsaturated olefinic comonomer(s). Preferably the $\alpha$-olefin comonomer(s) comprise(s) from 3 to 20 carbon atoms, more preferably from 2 to 12 carbon atoms and most preferably from 3 to 8 carbon atoms.

Examples of the $\alpha$-olefin comonomers include propylene, 1-butene, 1-pentene, 1-hexene, 4-methyl-1-pentene, 1-octene, 1-decene, stryrene and mixtures thereof. Particularly preferred comonomers are 1-butene, 1-hexene and 1-octene.

Typically, the amount of comonomer within the copolymer is from 1 to 30 wt% of the total weight of the copolymer and more preferably is from 1 to 5 wt% of the total weight of the copolymer.

The ethylene polymer can be produced in a polymerisation process comprising any catalyst known in the art.

The catalyst may be any catalyst which is capable of producing the desired ethylene polymer. Suitable catalysts are, among others, Ziegler - Natta catalysts based on a transition metal, such as titanium, zirconium and/or vanadium or metallocene catalysts or late transition metal catalysts. Especially Ziegler - Natta catalysts and metallocene catalysts are useful as they can produce polymers within a wide range of molecular weight with a high productivity.

Suitable Ziegler - Natta catalysts preferably contain a magnesium compound, an aluminium compound and a titanium compound supported on a particulate support and optionally internal electron donors selected from aliphatic or aromatic ethers and esters like typically benzoates or tetrahydrofuran.

The particulate support can be an inorganic oxide support, such as silica, alumina, titania, silica-alumina and silica-titania. Preferably, the support is silica.

The average particle size of the silica support can be typically from 10 to 100 $\mu$m. However, it has turned out that special advantages can be obtained if the support has an average particle size from 15 to 30 $\mu$m, preferably from 18 to 25 $\mu$m. Alternatively, the support may have an average particle size of from 30 a 80 $\mu$m, preferably from 30 to 50 $\mu$m. Examples of suitable support materials are, for instance, ES747JR produced and marketed by Ineos Silicas (former Crossfield), and SP9-491, produced and marketed by Grace

The magnesium compound is a reaction product of a magnesium dialkyl and an alcohol. The alcohol is a linear or branched aliphatic monoalcohol. Preferably, the alcohol has from 6 to 16 carbon atoms. Branched alcohols are especially preferred, and 2-ethyl-1-hexanol is one example of the preferred alcohols. The magnesium dialkyl may be any compound of magnesium bonding to two alkyl groups, which may be the same or different. Butyl-octyl magnesium is one example of the preferred magnesium dialkyls.

The aluminium compound is chlorine containing aluminium alkyl. Especially preferred compounds are aluminium alkyl dichlorides and aluminium alkyl sesquichlorides.

The titanium compound is a halogen containing titanium compound, preferably chlorine containing titanium compound. Especially preferred titanium compound is titanium tetrachloride.

The catalyst can be prepared by sequentially contacting the carrier with the above mentioned compounds, as described in EP 688794, WO 99/51646 or EP 1481994. Alternatively, it can be prepared by first preparing a solution from the components and then contacting the solution with a carrier, as described in WO 01/55230. If an internal donor is used, it can be added either before or after titanation step.

Preferably, the ethylene polymer is produced in a process comprising a Ziegler-Natta catalyst.

It is also possible that the ethylene polymer is produced in a process comprising a mixture of a Ziegler-Natta catalyst and another catalyst of the same or different nature. In the case of a mixture of a Ziegler-Natta catalyst and a catalyst of a different nature, it is preferred that at least 90 % of the ethylene polymer is produced by a Ziegler-Natta catalyst.

Any known process may be used, e.g. slurry, gas phase or solution process or a combination of the above mentioned processes.

Further preferred, the ethylene polymer is produced in a gas phase process as disclosed for example in EP 4966 B2, EP 71430 B1, EP 130607 B1 and US 4376191 A.

The ethylene polymer is present in an amount of from 80.0 to 98.0 wt%, preferably from 80.5 to 97.0 wt%, and even more preferably from 82.0 to 95.0 wt%, based on the total weight of the adhesive polymer composition.

The ethylene polymer before grafting has a melt flow rate $MFR_2$ of from 1 to 20 g/10min, preferably from 2 to

10 g/10min.

The ethylene polymer before grafting has a density of from 0.920 to 0.950, preferably from 0.925 to 0.945 $g/cm^3$ and more preferably from 0.930 to 0.940 $g/cm^3$.

The ethylene-butylacrylate copolymer is an elastomeric ethylene-butylacrylate copolymer (EBA). The ethylene-butylacrylate copolymer is produced in a free-radical process.

The ethylene-butylacrylate copolymer contains units derived from butylacrylate in an amount of from 3.0 to 6.2 wt%, based on the adhesive polymer composition. In a preferred embodiment the ethylene-butylacrylate copolymer contains units derived from butylacrylate in an amount of from 3.2 to 5.5 wt%, based on the adhesive polymer composition. In a more preferred embodiment the ethylene-butylacrylate copolymer contains units derived from butylacrylate in an amount of from 3.5 to 5.0 wt%, or even from 3.5 to 4.9 wt%, based on the total weight of the adhesive polymer composition.

In a preferred embodiment the adhesive polymer composition has an $MFR_2$ value after grafting of from 0.1 to 10 g/min, preferably from 0.5 to 5 g/min, and most preferably from 1.3 to 4 g/10min.

The adhesive polymer composition has usually after grafting a density of from 0.920 to 0.970 $g/cm^3$, more preferably from 0.925 to 0.955 $g/cm^3$, and most preferably from 0.934 to 0.945 $g/cm^3$.

The adhesive polymer composition has typically after grafting a Vicat softening temperature of from 100.0 to 106.0 °C and more typically from 100.5 to 104.0 °C.

The adhesive polymer composition comprises an ethylene polymer and an ethylene-butylacrylate copolymer as described above. In addition to these components, conventional additives may also be present in the composition in small amounts preferably up to at most 4.0 wt%. For example, an antioxidant may be present in the composition in an amount of at most 10 000 ppm, more preferably at most 5 000 ppm and most preferably at most 3 000 ppm.

It is preferred that the adhesive polymer composition apart from the conventional additives consists of the ethylene polymer and the ethylene-butylacrylate copolymer, i.e. that no further polymer before or after grafting is added. Conventional additives may be added before or after grafting.

As acid grafting agent, any such agent can be used which is known to be suitable for this purpose by the person skilled in the art.

Preferably, the acid grafting agent is an unsaturated carboxylic acid or a derivative thereof such as anhydrides, esters and salts (both metallic or non-metallic). Preferably, the unsaturated group is in conjugation with the carboxylic group. Examples of such grafting agents include acrylic acid, methacrylic acid, fumaric acid, maleic acid, nadic acid, citraconic acid, itaconic acid, crotonic acid, and their anhydrides, metal salts, esters amides or imides. The preferred grafting agents are maleic acid its derivatives such as maleic anhydride, and in particular maleic anhydride.

Grafting can be carried out by any process known in the art such as grafting in a melt without a solvent or in solution or dispersion or in a fluidised bed. Preferably, grafting is performed in a heated extruder or mixer as e.g. described in US 3236917 A, US 4639495 A, US 4950541 A or US 5194509 A.

Preferably, grafting is carried out in a twin screw extruder such as described in US 4950541 A.

Grafting may be carried out in the presence or absence of a radical initiator but is preferably carried out in the presence of a radical initiator such as an organic peroxide, organic perester or organic hydroperoxide.

The amount of the acid grafting agent added to the adhesive polymer composition before grafting is preferably from 0.01 to 3.0 parts by weight, more preferably from 0.03 to 1.5 parts by weight, based on the adhesive polymer composition.

Grafting may be applied either to the ethylene polymer or to the blend of the ethylene polymer and the ethylene-butylacrylate copolymer. Preferably, grafting is applied to the blend of the ethylene polymer and the ethylene-butylacrylate copolymer.

The adhesive polymer composition of this invention is most useful as co-extrudable adhesive, but other applications are not excluded.

The present invention also relates to an article which comprises an adhesive layer comprising the adhesive polymer composition as described above. Such articles e.g. comprise pipes, cables, films, articles made by extrusion coating and articles used in engineering applications. In the latter, the adhesive polymer composition may also be used to provide compatibility between various layers or parts.

In a preferred embodiment, the adhesive layer in the article is adjacent to a polyolefin layer. The present invention in particular relates to a multilayer pipe, i.e. a pipe comprising a multilayer coating with two, three, four, five or more layers, which comprises a polyolefin layer and an adhesive layer adjacent to the polyolefin layer which comprises the inventive adhesive polymer composition as described above.

In a preferred embodiment, the present invention also relates to a coated metal pipe, comprising a polyolefin layer and a layer of a polar polymer, in particular an epoxy layer, wherein between said layers an adhesive layer is present which comprises the adhesive polymer composition according to any of the above described embodiments. In particular, the present invention also relates to a metal pipe with an three-layer protective coating consisting of an inner epoxy layer, an intermediate adhesive layer comprising the inventive adhesive polymer composition and an outer polyolefin layer such as a polyethylene or polypropylene layer.

Furthermore, the present invention relates to the use of the adhesive polymer composition as described above for the production of an adhesive layer. Preferably, the present invention further relates to the use of the adhesive composition for the production of an adhesive layer in an article as e.g. a pipe, a cable, a film, an article made by extrusion coating and articles used in engineering applications. In these latter articles, the adhesive composition may also be used to provide compatibility between various layers or parts.

In a preferred embodiment, the present invention also relates to the use of the adhesive polymer composition for the production of an adhesive layer of a pipe. In particular, the present invention also relates to the use of the adhesive polymer composition for the production of an adhesive layer of the coating of a metal pipe with a three-layer protective coating as described above.

In the production of coated metal pipes having a three-layer coating preferably the epoxy layer is produced first by spraying epoxy in powder or liquid form, in one or two component form, onto the heated outer surface of the metal wall. Thereby, the epoxy forms a thin layer which firmly adheres to the metal surface. Subsequently, the adhesive and the outer polyolefin layer which preferably is a polyethylene or polypropylene layer are co-extruded onto the epoxy layer. The adhesive can also be applied by spraying the adhesive in a powder form onto the epoxy layer.

**Methods**

Melt index

The melt flow rate (MFR) is determined under a load of 2.16 kg at 190 °C according to ISO 1133-1 method B and is indicated in g/10 min.

Molecular weight averages, molecular weight distribution (Mn, Mw, Mz, MWD)

Molecular weight averages ($M_z$, $M_w$ and $M_n$), Molecular weight distribution (MWD) and its broadness, described by polydispersity index, PDI= $M_w/M_n$ (wherein $M_n$ is the number average molecular weight and $M_w$ is the weight average molecular weight) were determined by Gel Permeation Chromatography (GPC) according to ISO 16014-1:2003, ISO 16014-2:2003, ISO 16014-4:2003 and ASTM D 6474-12 using the following formulas:

$$M_n = \frac{\sum_{i=1}^{N} A_i}{\sum_{i=1}^{N} (A_i/M_i)} \quad (1)$$

$$M_w = \frac{\sum_{i=1}^{N} (A_i x M_i)}{\sum_{i=1}^{N} A_i} \quad (2)$$

$$M_z = \frac{\sum_{i=1}^{N} (A_i x M_i^2)}{\sum_{i=1}^{N} (A_i x M_i)} \quad (3)$$

For a constant elution volume interval $\Delta V_i$, where $A_i$, and $M_i$ are the chromatographic peak slice area and polyolefin molecular weight (Mw), respectively associated with the elution volume, $V_i$, where N is equal to the number of data points obtained from the chromatogram between the integration limits. Peak Integration was performed according to ISO 16017-1:2003, which means that oil and antioxidant peaks below 1000 g/mol are not included into the calculation of the MWD.

A high temperature GPC instrument, equipped with an infrared (IR) detector (IR5) from PolymerChar (Valencia, Spain), equipped with 3 x Agilent-PLgel Olexis and 1x Agilent-PLgel Olexis Guard columns was used. As the solvent and mobile phase 1,2,4-trichlorobenzene (TCB) stabilized with 250 mg/L 2,6-Di tert butyl-4-methyl-phenol) was used. The chromatographic system was operated at 160 °C and at a constant flow rate of 1 mL/min. 200 μL of sample solution was injected per analysis. Data collection was performed using PolymerChar GPCone software.

The column set was calibrated using universal calibration (according to ISO 16014-2:2003) with 19 narrow MWD polystyrene (PS) standards in the range of 0.5 kg/mol to 11 500 kg/mol. The PS standards were dissolved at 160°C for 15 min. The conversion of the polystyrene peak molecular weight to polyolefin molecular weights is accomplished by using the Mark Houwink equation and the following Mark Houwink constants:

$$K_{PS} = 19 \times 10^{-3}\ mL/g, \quad \alpha_{PS} = 0.655$$

(continued)

$$K_{PE} = 39 \times 10^{-3}\ mL/g, \quad \alpha_{PE} = 0.725$$
$$K_{PP} = 19 \times 10^{-3}\ mL/g, \quad \alpha_{PP} = 0.725$$

A third order polynomial fit was used to fit the calibration data.

All samples were prepared in the concentration range of 0.5 -1 mg/ml and dissolved at 160 °C for 3 hours under continuous gentle shaking.

Density

Density of the polymer is measured according to ISO 1183 -1 Method A using compression moulded samples.

Determination of 1-butene content in PE by FTIR

FTIR was used to determine the 1-butene content of the polyethylene. FTIR measurement were done on a Perkin Elmer Spectrum One. The total methyl absorption at 1377-1379 $cm^{-1}$ was used for the analysis and the PE absorption peak around 2635 cm-1 was used for normalisation. Three films of each sample were pressed in a hydraulic press. The analyses were performed on these thin films with thickness of 0.080-0.100 mm. Teflon film with embossed surface was used instead of Mylar foil to the metal plates to avoid excessive shiny films that interfere with the analysis. The instrument was run with default settings (according to the standard set) with the exception of resolution (2 $cm^{-1}$) and number of scans (4).

The level of 1-butene in the sample was calculated according to:

$$\text{Wt\% 1-butene} = 5.78\ [(\text{abs } 1377\ /\ \text{abs } 2635) - 0.175]$$

Where abs 1377 = absorbance from methyl groups at approximately 1377-1379 $cm^{-1}$ (height) and abs 2635 = PE absorbance at max approximately 2635 $cm^{-1}$ - min approximately 2445 $cm^{-1}$.

Vicat softening temperature

Vicat temperature of the polymer is measured according to ISO 306 method A 50. Plates are compression moulded (4 mm thick) and specimens (10x10x4 mm) cut out of the plates.

Butylacrylate content quantification by NMR spectroscopy

Quantitative nuclear-magnetic resonance (NMR) spectroscopy was used to quantify the butylacrylate (BA) content of the polymers.

Quantitative $^{1}H$ NMR spectra recorded in the molten-state using a Bruker Avance III 500 NMR spectrometer operating at 500.13 MHz. All spectra were recorded using a $^{13}C$ optimised 7 mm magic-angle spinning (MAS) probehead at 150°C using nitrogen gas for all pneumatics. Approximately 200 mg of material was packed into a 7 mm outer diameter zirconia MAS rotor and spun at 4 kHz. This setup was chosen primarily for the high sensitivity needed for rapid identification and accurate quantification {klimke06, parkinson07, castignolles09}.Standard single-pulse excitation was employed using a recycle delay of 2s {pollard04, klimke06}. A total of 16 transients were acquired per spectra.

Quantitative $^{1}H$ NMR spectra were processed, integrated and quantitative properties determined using custom spectral analysis automation programs. All chemical shifts were internally referenced to the bulk ethylene methylene signal at 1.33 ppm.

Assignment for butylacrylate (BA) incorporation {brandolini01}:

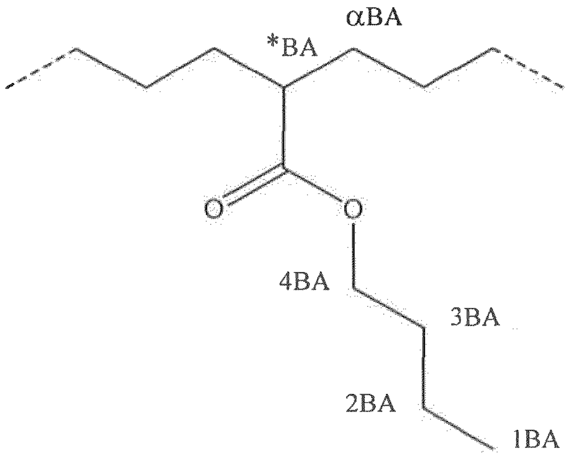

The butylacrylate (BA) incorporation was quantified using the integral of the signal at 4.06 ppm assigned to the 4BA sites, accounting for the number of reporting nuclei per comonomer:

$$BA = I_{4BA} / 2$$

The ethylene content was quantified using the integral of the bulk aliphatic ($I_{bulk}$) signal between 0.00 - 3.00 ppm. This integral include 1BA (3), 2BA (2), 3BA (2), *BA (1) and αBA (2) sites from isolated butylacrylate incorporation as well as the sites from polyethylene sequences. The total ethylene content was calculated based on the bulk integral and compensating for the above mentioned BA sites:

$$E = (1/4)*[ I_{bulk} - 10*BA ]$$

The total mole fractions of butylacrylate (BA) in the polymer was calculated as:

$$fBA = BA / ( E + BA )$$

The total comonomer incorporation of butylacrylate (BA) in mole percent was calculated from the mole fractions in the standard manner:

$$BA [mol\%] = 100 * fBA$$

The total comonomer incorporation of butylacrylate (BA) in weight percent was calculated from the mole fractions and molecular weight of the monomers in the standard manner:

$$BA [wt\%] = 100 * ( fBA * 128.17) / ( (fBA * 128.17) + ((1- fBA) * 28.05) )$$

klimke06
Klimke, K., Parkinson, M., Piel, C., Kaminsky, W., Spiess, H.W., Wilhelm, M., Macromol. Chem. Phys. 2006;207:382.
parkinson07
Parkinson, M., Klimke, K., Spiess, H.W., Wilhelm, M., Macromol. Chem. Phys. 2007;208:2128.
pollard04
Pollard, M., Klimke, K., Graf, R., Spiess, H.W., Wilhelm, M., Sperber, O., Piel, C., Kaminsky, W., Macromolecules 2004;37:813.
castignolles09
Castignolles, P., Graf, R., Parkinson, M., Wilhelm, M., Gaborieau, M., Polymer 50 (2009) 2373 brandolini01
A.J. Brandolini, D.D. Hills, "NMR spectra of polymers and polymer additives", Marcel Deker Inc., 2000

Peel strength

Peel strength designates the relative strength of the bonding between epoxy layer and adhesive layer. The peel strength of the coating compositions was measured at 23 degrees according to ISO21809-1:2011 using a Zwick/Roell, with the following alterations to the method: The peel strength was recorded for three minutes, after which the mean value was calculated. The mean value corresponds to the reported peel strength of the composition.

**Examples**

Inventive examples IE1-IE4

A medium density polyethylene was produced using a Ziegler-Natta catalyst.

Catalyst preparation:

Silica calcinated at 600 °C for 6 h was used as carrier material. 5 g of silica was used for the synthesis. 1.1 mmol of 25 % heptane solution of ethyl-aluminium-di-chloride (EADC) was added per gram of silica. The EADC was allowed to react with the silica at a temperature between 30°C and 40 °C for 1 h. Subsequently, 1.0 mmol of a Mg-alcoholate solution was added per gram of silica. The Mg-solution was prepared by adding 2-ethyl-hexanol to an octyl-butyl-Mg (BOMAG) solution in a molar ratio of 1.83 to 1. The Mg-reagent was allowed to react with the EADC for 1½ h at a temperature between 30°C and 40 °C. Heptane was added to create a slurry. The reaction temperature during the preparation was kept between 30°C and 40 °C. Subsequently, 0.5 mmol of $TiCl_4$ was slowly added per gram of silica during an addition time of ½ h and then 0.52 mmol of THF was added per gram of silica at a temperature between 30°C and 40°C over a period of 20 min (THF/Mg molar ratio 0.52).

Polymerisation:

The polymerisation was carried out in a gas phase reactor. Temperature was 90 °C, total pressure 21 bar $C_2$ partial pressure 5.5, Al/Ti ratio 25 mol/mol, $C_4/C_2$ 220 mol/kmol and $H_2/C_2$ 250 mol/kmol.

Extrusion:

The resulting polyethylene powder had a density of 0.934 g/cm$^3$ and $MFR_2$ of 3.7 g/10min.
The polyethylene (99.925 wt%) was compounded and pelletised together with an antioxidant (Irganox B215, 0.075 wt%). The pelletised polyethylene had a density of 0.934 g/cm$^3$, $MFR_2$ of 3.7 g/10min, 1-butene content of 2.8 wt%, Mw of 85 050 g/mol, Mn of 17 900 g/mol, Mz of 315 500 g/mol and MWD of 4.7.

The adhesive blend compositions were grafted in Werner & Pfleiderer ZSK 30W co-rotating, twin-screw, extruder. The same pelletised polyethylene was used in all inventive examples. Polyethylene feed was ca. 2000 kg/h in all examples. The adhesive blend compositions and their properties are shown in Table 1. The ethylene butyl acrylate elastomer, which has a density of 0.926 g/cm$^3$, $MFR_2$ of 4.5 g/10 min and butyl acrylate content of 27 wt%, was added in various amounts. 1000 ppm of antioxidant (Irganox 1010) was added as stabiliser and the graft was achieved by adding maleic anhydride. The peroxide initiator (Perkadox 14S-fl, Akzo Nobel) was dissolved in isododecane as a 30% solution. The temperature in the extruder increased from 170 °C at the feeding to 210 °C at the die and the screw speed was set at 350 rpm.

Comparative examples CE1 and CE2

Comparative examples were repeated as inventive examples except for the higher ethylene butyl acrylate amounts in the compositions.

Table 1.

| | Unit | IE1 | IE2 | IE3 | IE4 | CE1 | CE2 |
|---|---|---|---|---|---|---|---|
| Polyethylene | wt% | 80.6 | 80.6 | 82.1 | 83.6 | 74.5 | 77.6 |
| Ethylene butyl acrylate | wt% | 19.0 | 19.0 | 17,5 | 16.0 | 25.0 | 22.0 |
| Maleic Anhydride | wt% | 0.20 | 0.18 | 0.19 | 0.19 | 0.20 | 0.18 |

(continued)

| | Unit | IE1 | IE2 | IE3 | IE4 | CE1 | CE2 |
|---|---|---|---|---|---|---|---|
| Peroxide in solvent | wt% | 0.15 | 0.15 | 0.15 | 0.14 | 0.20 | 0.15 |
| Antioxidant | wt% | 0.1 | 0.1 | 0.1 | 0.1 | 0.1 | 0.1 |
| Butyl acrylate | wt% | 4.7 | 4.9 | 4.3 | 4.8 | 6.3 | 6.3 |
| $MFR_2$ | g/10 min | 1.3 | 1.4 | 1.4 | 1.4 | 1.2 | 1.2 |
| Density | g/cm$^3$ | 0.934 | 0.934 | 0.934 | 0.935 | 0.933 | 0.933 |
| Vicat softening temperature | °C | 102.0 | 100.6 | 101.8 | 104.0 | 96.0 | 98.0 |
| Peel strength 80°C | N/cm | 67 | 67 | 59 | 64 | 62 | 63 |
| Peel strength 90°C | N/cm | 36 | 35 | 34 | 40 | 36 | 38 |

From the results it can be seen that inventive examples, i.e. adhesive compositions with lower amounts of butyl acrylate, have superior Vicat softening temperatures compared to comparative examples. Peel strength values of inventive examples at 80 and 90 °C are comparable or slightly higher than with comparative examples.

## Claims

1. An adhesive polymer composition comprising

   a) 80.0 to 98.0 wt% of an ethylene polymer,
   b) 2.0 to 20.0 wt% of an ethyl ene-butyl acrylate copolymer, and
   c) 0 to 4.0 wt% of additives, based on the total weight of the adhesive polymer composition,
   wherein the ethylene-butylacrylate copolymer contains units derived from butylacrylate in an amount of from 3.0 to 5.5 wt%, based on the total weight of the adhesive polymer composition and the ethylene polymer or the ethylene polymer and the ethylene-butylacrylate copolymer have been grafted with an acid grafting agent.

2. The adhesive polymer composition according to claim 1, wherein the ethylene polymer is a copolymer of ethylene with one or more comonomers having 3 to 8 carbon atoms.

3. The adhesive polymer composition according to any one of the preceding claims, wherein the ethylene polymer has been produced in a process using a Ziegler-Natta catalyst.

4. The adhesive polymer composition according to any one of the preceding claims, wherein the ethylene polymer is present in an amount of from 80.5 to 97.0 wt% based on the total weight of the adhesive polymer composition, more preferably from 82.0 to 95.0 wt% based on the total weight of the adhesive polymer composition.

5. The adhesive polymer composition according to any one of the preceding claims, wherein the ethylene polymer has an $MFR_2$ of from 1 to 20 g/10min as determined according to ISO 1133-1 method B under a load of 2.16 kg load at 190°C, more preferably from 2 to 10 g/10min.

6. The adhesive polymer composition according to any one of the preceding claims, wherein the ethylene polymer has a density of from 0.920 to 0.950 g/cm$^3$, more preferably from 0.925 to 0.945 g/cm$^3$.

7. The adhesive polymer composition according to any one of the preceding claims, wherein the adhesive polymer composition has an $MFR_2$ of from 0.1 to 10 g/10min as determined according to ISO 1133-1 method B under a load of 2.16 kg load at 190°C, more preferably from 0.5 to 5 g/10min, and most preferably from 1.3 to 4 g/10min.

8. The adhesive polymer composition according to any one of the preceding claims, wherein the adhesive polymer composition has a density of from 0.920 to 0.970 g/cm$^3$, more preferably from 0.925 to 0.955 g/cm$^3$, and most preferably from 0.934 to 0.945 g/cm$^3$.

9. The adhesive polymer composition according to any one of the preceding claims, wherein the adhesive polymer

composition has a Vicat softening temperature of from 100.0 to 106.0 °C as determined according to ISO 306 method A 50, more preferably from 100.5 to 104.0 °C.

**10.** The adhesive polymer composition according to any one of the preceding claims, wherein the acid grafting agent is an unsaturated carboxylic acid or a derivative thereof, preferably maleic acid or a derivative thereof, more preferably maleic anhydride.

**11.** The adhesive polymer composition according to any one of the preceding claims, wherein units derived from the acid grafting agent are present in an amount of from 0.01 to 3.0 parts by weight, preferably from 0.03 to 1.5 parts by weight based on the total weight of the adhesive polymer composition.

**12.** The adhesive polymer composition according to any one of the preceding claims, wherein the ethylene-butylacrylate copolymer contains units derived from butylacrylate in an amount of from 3.2 to 5.0, preferably from 3.5 to 4.9 wt%, based on the total weight of the adhesive polymer composition.

**13.** The adhesive polymer composition according to any one of the preceding claims, wherein the additives comprise an antioxidant in an amount of at most 10000 ppm based on the total weight of the adhesive polymer composition.

**14.** An article, in particular a multilayer pipe, comprising an adhesive layer which comprises the adhesive polymer composition according to any one of the preceding claims.

**15.** Use of the adhesive polymer composition according to any one of claims 1 to 13 for the production of an adhesive layer, preferably of an adhesive layer of a pipe.

**Patentansprüche**

**1.** Klebstoffpolymerzusammensetzung, umfassend

a) 80,0 bis 98,0 Gew.-% eines Ethylenpolymers,
b) 2,0 bis 20,0 Gew.-% eines Ethylen-Butylacrylat-Copolymers, und
c) 0 bis 4,0 Gew.-% an Additiven, bezogen auf das Gesamtgewicht der Klebstoff-Polymerzusammensetzung, wobei das Ethylen-Butylacrylat-Copolymer von Butylacrylat abgeleitete Einheiten in einer Menge von 3,0 bis 5,5 Gew.-%, bezogen auf das Gesamtgewicht der Klebstoffpolymerzusammensetzung enthält, und das Ethylenpolymer oder das Ethylenpolymer und das Ethylen-Butylacrylat-Copolymer mit einem sauren Pfropfmittel gepfropft worden sind.

**2.** Klebstoffpolymerzusammensetzung nach Anspruch 1, wobei das Ethylenpolymer ein Copolymer von Ethylen mit einem oder mehreren Comonomeren mit 3 bis 8 Kohlenstoffatomen ist.

**3.** Klebstoffpolymerzusammensetzung nach einem der vorhergehenden Ansprüche, wobei das Ethylenpolymer in einem Verfahren unter Verwendung eines Ziegler-Natta-Katalysators hergestellt worden ist.

**4.** Klebstoffpolymerzusammensetzung nach einem der vorhergehenden Ansprüche, wobei das Ethylenpolymer in einer Menge von 80,5 bis 97,0 Gew.-%, bezogen auf das Gesamtgewicht der Klebstoffpolymerzusammensetzung, vorhanden ist, bevorzugter von 82,0 bis 95,0 Gew.-%, bezogen auf das Gesamtgewicht der Klebstoffpolymerzusammensetzung.

**5.** Klebstoffpolymerzusammensetzung nach einem der vorhergehenden Ansprüche, wobei das Ethylenpolymer einen $MFR_2$ von 1 bis 20 g/10min, vorzugsweise von 2 bis 10 g/10min, bestimmt nach ISO 1133-1 Methode B unter einer Last von 2,16 kg Last bei 190°C, aufweist.

**6.** Klebstoffpolymerzusammensetzung nach einem der vorhergehenden Ansprüche, wobei das Ethylenpolymer eine Dichte von 0,920 bis 0,950 g/cm$^3$, bevorzugter von 0,925 bis 0,945 g/cm$^3$ aufweist.

**7.** Klebstoffpolymerzusammensetzung nach einem der vorhergehenden Ansprüche, wobei die Klebstoffpolymerzusammensetzung einen $MFR_2$ von 0,1 bis 10 g/10min, bestimmt nach ISO 1133-1 Verfahren B unter einer Last von 2,16 kg Last bei 190°C, bevorzugter von 0,5 bis 5 g/10min, und am meisten bevorzugt von 1,3 bis 4 g/10min, aufweist.

8. Klebstoffpolymerzusammensetzung nach einem der vorhergehenden Ansprüche, wobei die Klebstoffpolymerzusammensetzung eine Dichte von 0,920 bis 0,970 g/cm$^3$, bevorzugter von 0,925 bis 0,955 g/cm$^3$ und am meisten bevorzugt von 0,934 bis 0,945 g/cm$^3$ aufweist.

9. Klebstoffpolymerzusammensetzung nach einem der vorhergehenden Ansprüche, wobei die Klebstoffpolymerzusammensetzung eine Vicat-Erweichungstemperatur von 100,0 bis 106,0 °C, bestimmt nach ISO 306 Verfahren A 50, bevorzugter von 100,5 bis 104,0 °C, aufweist.

10. Klebstoffpolymerzusammensetzung nach einem der vorhergehenden Ansprüche, wobei das saure Pfropfmittel eine ungesättigte Carbonsäure oder ein Derivat davon ist, vorzugsweise Maleinsäure oder ein Derivat davon, noch bevorzugter Maleinsäureanhydrid.

11. Klebstoffpolymerzusammensetzung nach einem der vorhergehenden Ansprüche, wobei von dem sauren Pfropfmittel abgeleitete Einheiten in einer Menge von 0,01 bis 3,0 Gewichtsteilen, vorzugsweise von 0,03 bis 1,5 Gewichtsteilen, bezogen auf das Gesamtgewicht der Klebstoffpolymerzusammensetzung, vorhanden sind.

12. Klebstoffpolymerzusammensetzung nach einem der vorhergehenden Ansprüche, wobei das Ethylen-Butylacrylat-Copolymer von Butylacrylat abgeleitete Einheiten in einer Menge von 3,2 bis 5,0, vorzugsweise von 3,5 bis 4,9 Gew.-%, bezogen auf das Gesamtgewicht der Klebstoffpolymerzusammensetzung, enthält.

13. Klebstoffpolymerzusammensetzung nach einem der vorhergehenden Ansprüche, wobei die Additive ein Antioxidans in einer Menge von höchstens 10000 ppm, bezogen auf das Gesamtgewicht der Klebstoffpolymerzusammensetzung, umfassen.

14. Gegenstand, insbesondere Mehrschichtrohr, mit einer Klebeschicht, die die Klebstoffpolymerzusammensetzung nach einem der vorhergehenden Ansprüche umfasst.

15. Verwendung der Klebstoffpolymerzusammensetzung nach einem der Ansprüche 1 bis 13 zur Herstellung einer Klebeschicht, vorzugsweise einer Klebeschicht eines Rohres.

## Revendications

1. Composition polymère adhésive comprenant

   a) 80,0 à 98,0 % en poids d'un polymère d'éthylène,
   b) 2,0 à 20,0 % en poids d'un copolymère d'éthylène-acrylate de butyle, et
   c) 0 à 4,0 % en poids d'additifs,
   basés sur le poids total de la composition polymère adhésive,
   dans laquelle le copolymère d'éthylène-acrylate de butyle contient des motifs dérivés d'acrylate de butyle en une quantité de 3,0 à 5,5 % en poids basés sur le poids total de la composition polymère adhésive et le polymère d'éthylène ou le polymère d'éthylène et le copolymère d'éthylène-acrylate de butyle ont été greffés avec un agent de greffage acide.

2. Composition polymère adhésive selon la revendication 1, dans laquelle le polymère d'éthylène est un copolymère d'éthylène avec un ou plusieurs comonomères ayant 3 à 8 atomes de carbone.

3. Composition polymère adhésive selon l'une quelconque des revendications précédentes, dans laquelle le polymère d'éthylène a été produit dans un procédé utilisant un catalyseur de Ziegler-Natta.

4. Composition polymère adhésive selon l'une quelconque des revendications précédentes, dans laquelle le polymère d'éthylène est présent en une quantité de 80,5 à 97,0 % en poids basés sur le poids total de la composition polymère adhésive, plus préférablement de 82,0 à 95,0 % en poids basés sur le poids total de la composition polymère adhésive.

5. Composition polymère adhésive selon l'une quelconque des revendications précédentes, dans laquelle le polymère d'éthylène a un $MFR_2$ de 1 à 20 g/10 min tel que déterminé conformément à la norme ISO 1131-1, méthode B, sous une charge de 2,16 kg à 190°C, plus préférablement de 2 à 10 g/10 min.

6. Composition polymère adhésive selon l'une quelconque des revendications précédentes, dans laquelle le polymère d'éthylène a une masse volumique de 0,920 à 0,950 g/cm$^3$, plus préférablement de 0,925 à 0,945 g/cm$^3$.

7. Composition polymère adhésive selon l'une quelconque des revendications précédentes, dans laquelle la composition polymère adhésive a un $MFR_2$ de 0,1 à 10 g/10 min tel que déterminé conformément à la norme ISO 1131-1, méthode B, sous une charge de 2,16 kg à 190°C, plus préférablement de 0,5 à 5 g/10 min, et le plus préférablement de 1,3 à 4 g/10 min.

8. Composition polymère adhésive selon l'une quelconque des revendications précédentes, dans laquelle la composition polymère adhésive a une masse volumique de 0,920 à 0,970 g/cm$^3$, plus préférablement de 0,925 à 0,955 g/cm$^3$, et le plus préférablement de 0,934 à 0,945 g/cm$^3$.

9. Composition polymère adhésive selon l'une quelconque des revendications précédentes, dans laquelle la composition polymère adhésive a une température de ramollissement Vicat de 100,0 à 106,0°C telle que déterminée conformément à la norme ISO 306, méthode A 50, plus préférablement de 100,5 à 104,0°C.

10. Composition polymère adhésive selon l'une quelconque des revendications précédentes, dans laquelle l'agent de greffage acide est un acide carboxylique insaturé ou un dérivé de celui-ci, de préférence l'acide maléique ou un dérivé de celui-ci, plus préférablement l'anhydride maléique.

11. Composition polymère adhésive selon l'une quelconque des revendications précédentes, dans laquelle les motifs dérivés de l'agent de greffage acide sont présents en une quantité de 0,01 à 3,0 parties en poids, de préférence de 0,03 à 1,5 parties en poids basées sur le poids total de la composition polymère adhésive.

12. Composition polymère adhésive selon l'une quelconque des revendications précédentes, dans laquelle le copolymère d'éthylène-acrylate de butyle contient des motifs dérivés d'acrylate de butyle en une quantité de 3,2 à 5,0, de préférence de 3,5 à 4,9 % en poids basés sur le poids total de la composition polymère adhésive.

13. Composition polymère adhésive selon l'une quelconque des revendications précédentes, dans laquelle les additifs comprennent un antioxydant en une quantité d'au plus 10 000 ppm basées sur le poids total de la composition polymère adhésive.

14. Article, en particulier tuyau multicouche, comprenant une couche adhésive qui comprend la composition polymère adhésive selon l'une quelconque des revendications précédentes.

15. Utilisation de la composition polymère adhésive selon l'une quelconque des revendications 1 à 13 pour la production d'une couche adhésive, de préférence d'une couche adhésive d'un tuyau.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 9937730 A1
- JP 8208915 A
- EP 0896044 A1
- EP 0791628 B1
- EP 1316598 B1
- WO 2009103516 A2
- EP 688794 A
- WO 9951646 A
- EP 1481994 A
- WO 0155230 A
- EP 4966 B2
- EP 71430 B1
- EP 130607 B1
- US 4376191 A
- US 3236917 A
- US 4639495 A
- US 4950541 A
- US 5194509 A


### Non-patent literature cited in the description


- **KLIMKE, K. ; PARKINSON, M. ; PIEL, C. ; KAMINSKY, W. ; SPIESS, H.W. ; WILHELM, M.** *Macromol. Chem. Phys.,* 2006, vol. 207, 382
- **PARKINSON, M. ; KLIMKE, K. ; SPIESS, H.W. ; WILHELM, M.** *Macromol. Chem. Phys.,* 2007, vol. 208, 2128
- **POLLARD, M. ; KLIMKE, K. ; GRAF, R. ; SPIESS, H.W. ; WILHELM, M. ; SPERBER, O. ; PIEL, C. ; KAMINSKY, W.** *Macromolecules,* 2004, vol. 37, 813
- **CASTIGNOLLES, P. ; GRAF, R. ; PARKINSON, M. ; WILHELM, M. ; GABORIEAU, M.** *Polymer,* 2009, vol. 50, 2373
- **A.J. BRANDOLINI ; D.D. HILLS.** NMR spectra of polymers and polymer additives. Marcel Deker Inc, 2000